# EUROPÄISCHE PATENTANMELDUNG

(11) **EP 3 741 986 A1**
(43) Veröffentlichungstag der Anmeldung: **25.11.2020**
(21) Anmeldenummer: 20175174.0
(22) Anmeldetag: 18.05.2020
(51) Int. Cl.: F02M 26/54, F16F 1/10, F16K 31/04, F02M 26/70

(54) **AKTOR ZUR BETÄTIGUNG EINES REGELKÖRPERS EINER VERBRENNUNGSKRAFTMASCHINE**

(30) Priorität: 22.05.2019 DE 102019113643
(71) Anmelder: Pierburg GmbH, 41460 Neuss (DE)
(72) Erfinder: Rothgang, Stefan, 41460 Neuss (DE); Bachmann, Kerstin, 41460 Neuss (DE); Ferner, Hendrik, 41460 Neuss (DE)
(74) Vertreter: terpatent Patentanwälte ter Smitten Eberlein-Van Hoof Rütten Daubert

(57) **Zusammenfassung**

Es sind Aktoren (10) für einen Regelkörper (27) einer Verbrennungskraftmaschine mit einem Gehäuse (20), einem im Gehäuse (20) angeordneten Elektromotor (11) mit einem Rotor (12) und einem Stator (14), einem am Gehäuse (20) befestigbaren Deckel (30), einer rotierbaren Welle (16), die mit dem Rotor (12) zumindest drehfest verbunden ist, sowie einer im Gehäuse (20) befestigten und in einer Ebene gewickelten Spiralfeder (50) bekannt. Um eine Ausführung zu realisieren, in der die Spiralfeder (50) möglichst reibungsarm und daher energieeffizient ausgestaltet ist, sowie um die Verformung der Feder bei Belastung geführt umzusetzen, wird vorgeschlagen, dass am Gehäuse (20) ein Reibminderungselement (60, 60', 60") für die Spiralfeder (50) angeordnet ist.

## Beschreibung

Die Erfindung betrifft einen Aktor zur Betätigung eines Regelkörpers einer Verbrennungskraftmaschine mit einem Gehäuse, einem im Gehäuse angeordneten Elektromotor mit einem Rotor und einem Stator, einem am Gehäuse befestigbaren Deckel, einer rotierbaren Welle, die mit dem Rotor zumindest drehfest verbunden ist, sowie einer im Gehäuse befestigten und in einer Ebene gewickelten Spiralfeder.

Derartige, elektromagnetisch betätigte Aktoren werden insbesondere in Ventilvorrichtungen von Verbrennungskraftmaschinen zur Rückführung von Abgasen in den Ansaugtrakt der Verbrennungskraftmaschine eingesetzt. Es sind jedoch auch andere Anwendungen wie beispielsweise solche zur Wärmerückgewinnung für Heizzwecke eines Fahrgastinnenraums denkbar.

Die Spiralfeder, die in derartigen Aktoren bzw. Ventilvorrichtungen befestigt wird, erfüllt eine sogenannte Fail-Safe-Funktion. Kommt es zu einem technischen Defekt des Elektromotors oder fällt die Stromversorgung des Aktors aus, sorgt eine durch Vorspannung der Feder aufgebaute, mechanisch gespeicherte und hinlänglich große Energie in der Spiralfeder für ein Drehen des Ventils in eine definierte Position, sodass die Funktionalität der Verbrennungskraftmaschine möglichst nicht eingeschränkt wird. Derartige Spiralfedern werden beispielsweise in FR 1238445 und WO 88/07625 offenbart.

Bei den Ausgestaltungen in FR 1238445 und WO 88/07625 und anderen bekannten Ausführungen bestehen die Nachteile, dass die einzelnen Segmente der Spiralfeder bei zunehmender Federspannung bzw. ab einem bestimmten Verformungsgrad der Spiralfeder im Rahmen ihrer Formänderungsarbeit miteinander in mechanischen Kontakt geraten und gegeneinander reiben. Infolge der Reibungsarbeit wiederum wird die elektrische Energie des Aktors teilweise dissipiert. Des Weiteren erfolgt die Federspannung bzw. Federverformung ohne geordnete Führung durch etwaige Stifte, sodass die Spiralfeder sich unkontrolliert verformt. Vor dem Hintergrund eines einerseits reibungsarmen bzw. energieeffizienten und andererseits geforderten zuverlässigen bzw. versagenssicheren (fail-safe) Aktorbetriebs, muss daher möglichst verhindert werden, dass sich einerseits einzelne Federsegmente berühren und andererseits die Spiralfeder bei Bewegungen des Aktors im Fahrzeugbetrieb und infolge von Vibrationen etc. innerhalb des Gehäuses verhakt.

Es stellt sich daher die Aufgabe, eine möglichst reibungsarme und geführte Bewegung der Spiralfeder zu gewährleisten und Fehlfunktionen zu vermeiden.

Diese Aufgabe wird durch einen Aktor für einen Regelkörper mit den Merkmalen des Hauptanspruchs 1 gelöst. Dadurch, dass am Gehäuse ein Reibminderungselement für die Spiralfeder angeordnet ist, wird der Kontakt zwischen einzelnen Segmenten der Spiralfeder zumindest teilweise aufgehoben, wodurch die Eigenreibarbeit der Spiralfeder reduziert wird. Ferner leistet das Reibminderungselement einen Beitrag zum Halten der einzelnen Federsegmente in einer weitgehend konstanten Position, wodurch die Lage der Feder so weit eingegrenzt wird, dass sich die Feder im Gehäuse nicht mehr an Vorsprüngen, Kanten oder anderen Bauteilen des Aktors wie beispielsweise dem Deckel verhaken kann.

In einer bevorzugten Ausführungsform der Erfindung ist das Reibminderungselement als axialer Vorsprung im Gehäuse und mit dem Gehäuse einteilig ausgebildet. Die Spiralfeder ist zumindest teilweise in einem Zwischenraum zwischen dem Aktorgehäuse und dem radial weiter innen angeordneten Reibminderungselement geführt. Durch die mit dem Aktorgehäuse einteilige Ausbildung des Reibminderungselements entfällt die Notwendigkeit eines Reibminderungselements als gesondertes Bauteil. Zudem kann das Reibminderungselement eine langgestreckte Komponente in Umfangsrichtung des Aktorgehäuses aufweisen. Hierdurch werden die Segmente der Spiralfeder zuverlässig über eine längere Strecke voneinander beabstandet gehalten.

In einer alternativen Ausführung weist das Reibminderungselement einen Schenkel auf, der zwischen Windungen der Spiralfeder greift. So wird gewährleistet, dass der Abstand zwischen einzelnen Windungen bewahrt wird und ein mechanischer Kontakt, zumindest im Bereich des Schenkels des Reibminderungselements, unterbunden wird.

In einer bevorzugten Ausführung ist das Reibminderungselement u-förmig ausgebildet und weist zwei axiale Schenkel auf. Hierbei greift der erste axiale Schenkel zwischen die äußeren beiden Segmente der Spiralfeder und unterbindet eine Berührung zwischen den äußeren beiden Segmenten, wodurch die Eigenreibung der Spiralfeder gesenkt wird. Gleichzeitig steckt der zweite axiale Schenkel im Gehäuse des Aktors. Durch die Anordnung des zweiten Schenkels im Gehäuse werden dem Reibminderungselement Freiheitsgrade der Bewegung entzogen, sodass das Reibminderungselement zumindest teilweise in radiale und axiale Richtung immobilisiert wird. Insgesamt werden hierdurch auch die Bewegungs- bzw. Deformationsmöglichkeiten der Spiralfeder reduziert.

In einer weiterführenden vorteilhaften Ausgestaltung ist am ersten axialen Schenkel des Reibminderungselements oder am axialen Vorsprung am Gehäuse eine drehbar gelagerte Reibreduktionsrolle angeordnet. Die Reibreduktionsrolle kann beispielsweise mittels einer elastischen Steckverbindung am Reibminderungselement drehbar gelagert werden und reduziert die Reibung zwischen einzelnen Windungen der Spiralfeder in einem höheren Grad als ein Reibminderungselement ohne Reibreduktionsrolle, da die Reibreduktionsrolle eine Relativbewegung der Segmente der Spiralfeder durch seine Eigenbewegung bzw. durch Abrollen unterstützt.

In einer alternativen Ausführungsform der Erfindung weist das Reibminderungselement mehrere erste axiale Schenkel auf. Hierbei greifen die ersten axialen Schenkel zwischen die Windungen der Spiralfeder und gewährleisten die Beabstandung zwischen Spiralfedersegmenten über eine längere Distanz entweder in Umfangsrichtung der ersten Schenkel nebeneinander oder zwischen verschiedenen Windungen in Radialrichtung hintereinander. Auf diese Weise wird die Reibarbeit der Spiralfeder effizienter reduziert, da der Kontakt über eine größere Strecke entlang der spiralförmig verlaufenden Feder unterbunden wird. Zudem erfolgt durch das Greifen bzw. Halten der Spiralfeder an einer Vielzahl an Stellen die Federverformung kontrollierter und geordneter als durch das Halten an einer einzigen Stelle.

In einer bevorzugten Ausführung des erfindungsgemäßen Aktors ist ein Verbindungsabschnitt zwischen zwei ersten Schenkeln des Reibminderungselements ausgebildet. Dieser Verbindungsabschnitt ist zumindest teilweise formschlüssig in einer Ausnehmung des Gehäuses angeordnet. Der Formschluss gewährleistet, dass dem Reibminderungselement zumindest teilweise Bewegungsmöglichkeiten entzogen werden. Beispielsweise kann es sich in radiale Richtung nicht bewegen. Lediglich eine Bewegung in axiale Richtung des Aktors wäre möglich, wenn diese beispielswiese durch den Deckel des Aktors nicht verhindert würde.

Vorzugsweise ist ein den zumindest einen ersten Schenkel und den zumindest einen zweiten Schenkel verbindender Bereich des Reibminderungselements zumindest teilweise in einer Ausnehmung am Gehäuse geführt. Die Ausnehmung am Gehäuse entzieht dem Reibminderungselement infolge eines Formschlusses mindestens einen weiteren Freiheitsgrad und verhilft ihm in Zusammenhang mit dem zumindest einen zweiten Schenkel, der in das Aktorgehäuse gesteckt ist, eine Fixierung in einer Ebene, welche parallel zur Ebene der Spiralfeder und senkrecht zur Achse des Aktors angeordnet ist, sicherzustellen. Innerhalb dieser Ebene ist weder eine translatorische noch rotatorische Bewegung des Reibminderungselements möglich.

Vorzugsweise ist die Spiralfeder an einem ersten ihrer beiden Enden unmittelbar am Gehäuse befestigt. Die Befestigung erfolgt hierbei über Formschluss. Da das Gehäuse statisch ist, wird durch diese Befestigung die Grundlage für eine Relativbewegung der beiden Federenden bzw. für die Verformung der Spiralfeder geschaffen.

In einer hierzu weiterführenden Ausführungsform der Erfindung weist die Spiralfeder ein um mindestens 110° gebogenes erstes Ende auf. Dieses wird hinter einen korrespondierenden Gehäusevorsprung gesteckt bzw. umgreift diesen Gehäusevorsprung. Dabei erstreckt sich der Gehäusevorsprung sowohl in Umfangs-, als auch in Axialrichtung. Vorteile von gebogenen Enden der Spiralfeder sind die einfache Montage, die Entbehrlichkeit von zusätzlichen Befestigungselementen wie beispielsweise Ringen, Stiften, Klemmen, Klebstoffen oder dergleichen, sowie eine verlässliche Befestigung.

In einer vorteilhaften Ausgestaltung des erfindungsgemäßen Aktors ist ein zweites Ende der Spiralfeder an einem am Rotor ausgebildeten axialen Vorsprung befestigt. Unter Rotor werden in diesem Zusammenhang alle sich drehenden Teile des Elektromotors einschließlich der Welle oder eines Rückschlussrings oder einer Polscheibe bei Axialflussmotoren verstanden. Auch an diesem zweiten Ende erfolgt die Befestigung über Formschluss. Da der Rotor bewegbar ist, und vor dem Hintergrund des am statischen Gehäuse befestigten ersten Endes der Spiralfeder, kann durch Bestromung des Aktors die Spiralfeder in dieser Anordnung vorgespannt und gespannt werden.

Vorzugsweise ist das zweite Ende der Spiralfeder analog zum ersten Ende der Spiralfeder um mindestens 110° gebogen. Das zweite Ende ist dabei an einem Federhaltestift befestigt bzw. umgreift diesen, wobei der Federhaltestift axial ausgerichtet und mit einem rotierenden kreisförmigen Rückschlussring einteilig ausgebildet ist.

In einer bevorzugten Ausführung des erfindungsgemäßen Aktors weist der Rotor einen Federführungsstift auf. Dieser kann axial, zylindrisch und mit dem Rotor einteilig ausgebildet sein. Unter Rotor werden in diesem Zusammenhang alle sich drehenden Teile des Elektromotors einschließlich der Welle oder eines Rückschlussrings oder einer Polscheibe bei Axialflussmotoren verstanden. Durch seine Lage verhindert der Federführungsstift beim konzentrisch nach innen gerichtetem Zusammenziehen der Spiralfeder unter Verformung einen übermäßigen Versatz der Spiralfeder nach radial innen im Aktorgehäuse. So erfolgt eine geordnete und geführte Belastung der Spiralfeder.

In einer besonders bevorzugten Ausgestaltung der Erfindung ist im Deckel des Aktors ein Montageanschlag ausgebildet. Dieser Montageanschlag ist für die Vorspannung der Spiralfeder einsetzbar und vereinfacht den Montagevorgang.

Vorzugsweise liegt der Montageanschlag vor der Befestigung des Regelkörpers an die Welle des Aktors bei vorgespannter Spiralfeder gegen den am Rotor ausgebildeten Federführungsstift an. In diesem Fall fungiert der Federführungsstift als Anschlag für den Montageanschlag, sodass sich die vorgespannte Spiralfeder nicht in ihre Ruhelage, in der sie entlastet ist, bewegen kann. Die Vorspannung der Spiralfeder trägt dazu bei, dass eine ausreichend große Rückstellkraft bzw. Energie in der Spiralfeder gespeichert ist, um die Fail-Safe-Funktion des Aktors zu gewährleisten. Ausgehend von dieser Position wird die Spiralfeder weiter vorgespannt, um den Regelkörper zu befestigen.

Eine vorteilhafte Ausgestaltung des Montageanschlags liegt vor, wenn er als Bolzen ausgeführt ist, welcher von der Innenseite des Deckels axial in das Gehäuse des Aktors hineinragt. Dabei ist der Deckel derart ausgerichtet und mit dem Gehäuse verschraubt, dass der Bolzen an dem Federführungsstift unter Vorspannung der Spiralfeder anliegt. Durch die Anlage des Federführungsstifts am Bolzen wird eine Rotation des Rückschlussrings in lediglich eine Richtung zugelassen. Der statische Bolzen verhindert eine Bewegung des den Rückschlussring umfassenden Rotors in die entgegengesetzte Richtung.

Vorzugsweise ist der als Bolzen ausgeführte Montageanschlag aus einem Kunststoff gefertigt und mit dem Deckel einteilig ausgebildet. Eine derartige Ausgestaltung ermöglicht eine einfache Fertigung des Deckels, beispielsweise in einem Spritzgussverfahren. Des Weiteren wird hierdurch die Anzahl der Komponenten im Aktor verringert.

In einer alternativen Ausgestaltung des erfindungsgemäßen Aktors ist der als Montageanschlag fungierende Bolzen aus Stahl gefertigt und in den Deckel gesteckt. Ein Stahl-Bolzen gewährleistet eine Dauerfestigkeit des Montageanschlags.

Es wird somit ein Aktor für einen Regelkörper einer Verbrennungskraftmaschine geschaffen, der eine geringe Reibung und Dissipation in der eine Fail-Safe-Funktion wahrnehmenden Spiralfeder des Aktors gewährleistet. Darüber hinaus wird die Spiralfeder während ihrer Verformung mittels des Reibminderungselements kontrolliert geführt. Auf diese Weise wird das Risiko der Spiralfeder, sich an anderen Bauteilen im Aktorgehäuse zu verhaken oder aus ihrer Lagerungsposition herauszuspringen, reduziert.

Weitere Einzelheiten und Vorteile der vorliegenden Erfindung ergeben sich aus der nachfolgenden Beschreibung der Ausführungsbeispiele in Verbindung mit den Zeichnungen.
Figur 1 zeigt eine Seitenansicht eines erfindungsgemäßen Aktors mit einem über den Aktor betätigten Regelkörper inklusive eines Strömungsgehäuses in geschnittener Darstellung.
Figur 2 zeigt perspektivische Ansichten des Aktors aus zwei unterschiedlichen Blickwinkeln bei jeweils geöffnetem Deckel des Aktors.
Figur 3 zeigt eine perspektivische Ansicht des Aktors mit einem ersten Ausführungsbeispiel eines Reibminderungselements.
Figur 4 zeigt eine Draufsicht des erfindungsgemäßen Aktors aus Figur 3.
Figur 5 zeigt eine Seitenansicht eines mit den römischen Ziffern V gekennzeichneten Teilausschnitts aus Figur 4.
Figur 6 zeigt eine perspektivische Ansicht des Aktors mit einem zweiten Ausführungsbeispiel des Reibminderungselements.
Figur 7 zeigt eine perspektivische Ansicht des Aktors mit einem dritten Ausführungsbeispiel des Reibminderungselements.

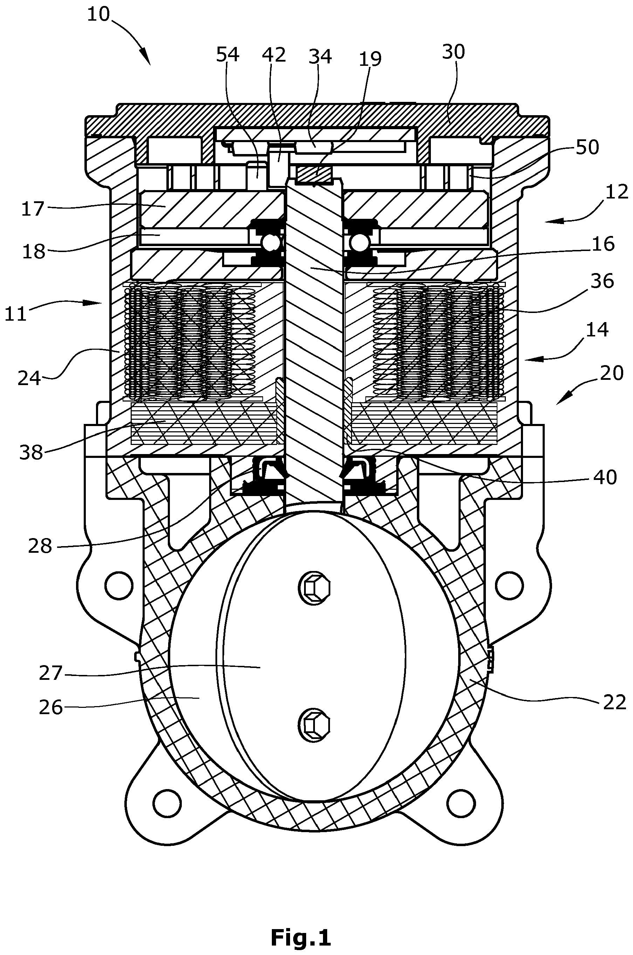

Der in Figur 1 dargestellte erfindungsgemäße Aktor 10 ist in einem Gehäuse 20 angeordnet, welches seinerseits aus einem Strömungsgehäuse 22, in dem ein Strömungskanal 26 ausgebildet ist, und einem Aktorgehäuse 24 besteht. Das Strömungsgehäuse 22 und das Aktorgehäuse 24 sind miteinander verschraubt.

Der Aktor 10 umfasst einen Elektromotor 11 in einer besonderen Bauform, einen sogenannten Axialflussmotor. Dieser umfasst einen Rotor 12 und einen Stator 14, die axial beabstandet zueinander angeordnet sind, wobei der die Bewegung erzeugende magnetische Fluss zumindest teilweise ebenfalls in axiale Richtung verläuft. Rotierende Komponenten des Aktors 10 und somit zum Rotor 12 zugehörig sind eine Welle 16, ein Rückschlussring 17 sowie ein ringförmiger, mehrpoliger und sektorförmig magnetisierter Rotormagnet 18. Der Rotormagnet 18 ist hierbei an den Rückschlussring 17 angeklebt. Der Rückschlussring 17 wiederum ist an seiner zentralen radialen Bohrung an die Welle 16 geklebt, sodass die Einheit aus Rückschlussring 17 und Rotormagnet 18 stets mit der Welle 16 rotiert. Ein Sensormagnet 19 ist gemäß Figur 1 am oberen Ende der Welle 16 in einer an der Stirnseite der Welle 16 ausgebildeten Aussparung angeordnet und rotiert ebenfalls stets mit der Welle 16.

Die Welle 16 erstreckt sich axial durch das Aktorgehäuse 24 und tritt über einen Durchbruch im Aktorgehäuse 24 aus dem Aktorgehäuse 24 hinaus und ragt in das Strömungsgehäuse 22 bzw. in einen Strömungskanal 26 hinein. Um den Aktor 10 vor möglichen chemischen und thermischen Auswirkungen von Abgasen zu bewahren, ist im Übergangsbereich zwischen dem Strömungsgehäuse 22 und dem Aktorgehäuse 24 eine die Welle 16 umgebende Dichtung 28 angeordnet, deren Lippengeometrie eine Abdichtung des Strömungsgehäuses 22 gegenüber dem Aktorgehäuse 24 gewährleistet.

Der Stator 14 umfasst eine bestrombare Wicklung 36 zur Erzeugung eines Magnetfeldes sowie ein Rückschlussblechpaket 38, das im Gehäuse 20 befestigt ist. Über eine Gleitlagerbuchse 40 ist der Stator 14 von der Bewegung der Welle 16 entkoppelt, die in der Gleitlagerbuchse 40 gelagert ist.

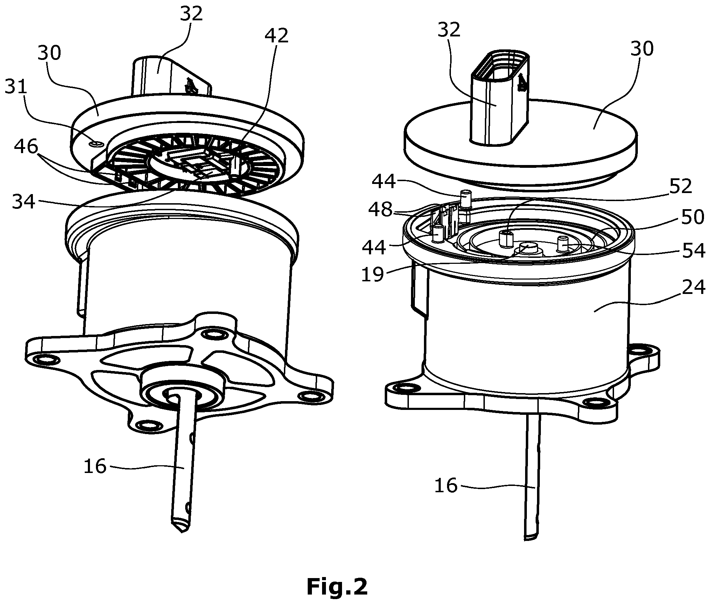

Ein aus Kunststoff gefertigter Deckel 30 des Aktors 10 umfasst einen in Figur 2 gezeigten Stecker 32 sowie elektronische Bauteile zur Steuerung bzw. Betätigung des Aktors 10. Ein Sensor 34, der am Deckel 30 befestigt ist, dient in Wechselwirkung mit dem Sensormagnet 19 der Lageerfassung der Welle 16 des Aktors 10 und somit der Erfassung der Stellung eines im Aktorbetrieb mit der Welle 16 verbundenen Regelkörpers 27, der im Strömungsgehäuse 22 angeordnet ist und zur Regelung des Durchströmungsquerschnitts dient. Des Weiteren weist der Deckel 30 einen Montageanschlag 42 auf, der als Bolzen ausgebildet ist und axial aus dem Deckel 30 hinaus- und in das Aktorgehäuse 24 hineinragt. Der Montageanschlag 42 ist hierbei mit dem Deckel 30 einteilig ausgebildet. Ferner sind am Aktorgehäuse 24 zwei axiale Montagebolzen 44 ausgebildet, die die Positionierung und Befestigung des Deckels 30 während seiner Montage an das Aktorgehäuse 24 unterstützen. Korrespondierend zu den beiden Montagebolzen 44 sind im Deckel 30 zwei Löcher 31 ausgebildet, welche die rotatorische Position des Deckels 30 festlegen. Darüber hinaus sind am Deckel 30 zwei sich axial erstreckende Kontaktfahnen 46 ausgebildet. Korrespondierend zu den Kontaktfahnen 46 sind am Aktorgehäuse 24 elektrische Anschlüsse 48 angeordnet, die die Stromversorgung des Stators 14 bzw. der Wicklungen 36 des Stators 14 gewährleisten.

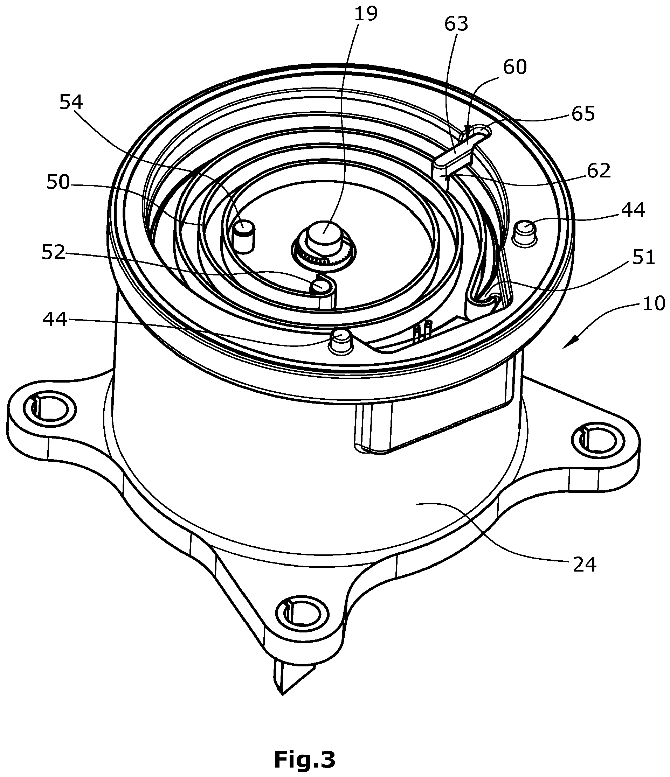

Eine Spiralfeder 50, die aus einem in einer Ebene gewickelten Flachbandmetall gefertigt ist, ist axial zwischen dem Rückschlussring 17 und dem Deckel 30 des Aktors 10 und radial zumindest weitgehend innerhalb des Aktorgehäuses 24 angeordnet. An einem ersten Ende ist die Spiralfeder 50 um etwa 170° gebogen und formschlüssig am Aktorgehäuse 24 befestigt, wie Figur 3 zu entnehmen ist. Hierfür ist das erste Ende der Spiralfeder 50 hinter einen am Aktorgehäuse 24 ausgebildeten Vorsprung 51, der eine sich jeweils in Umfangs- und Axialrichtung erstreckende Komponente aufweist, gesteckt. An einem zweiten Ende ist die Spiralfeder 50 formschlüssig mit dem Rotor 12 bzw. mit dem Rückschlussring 17 verbunden. Hierbei umgreift das zweite Ende der Spiralfeder 50 einen Federhaltestift 52, der als axialer Vorsprung am Rückschlussring 17 ausgebildet ist. Der Umschlingungswinkel des zweiten gebogenen Endes beträgt ebenfalls etwa 170°. Die Befestigung der Spiralfeder 50 einerseits am statischen Aktorgehäuse 24 und andererseits am bewegbaren Rotor 12 gewährleistet eine Möglichkeit der Vorspannung und Spannung der Spiralfeder 50, da die beiden Enden gegeneinander relativ bewegt bzw. rotiert werden können.

Der Rückschlussring 17 weist parallel zum Federhaltestift 52 einen Federführungsstift 54 auf, welcher ebenfalls als axialer Vorsprung und mit dem Rückschlussring 17 einteilig ausgebildet ist. Dabei ist der Federführungsstift 54 zum Federhaltestift 52 um etwa 90° in Umfangsrichtung beabstandet. Des Weiteren ist die Spiralfeder 50 in ihrem entspannten Zustand in Radialrichtung beabstandet zum Federführungsstift 54 angeordnet. Der Federführungsstift 54 gewährleistet bei Vorspannung und Spannung der Spiralfeder 50 eine geordnete Bewegung und verbesserte Lagebeständigkeit der Spiralfeder 50, da sie einen Versatz der Spiralfeder 50 nach radial innen einschränkt. Die Spiralfeder 50 wird hierdurch daran gehindert, beliebige Bewegungen auszuführen und wird bei Aktorbetätigungen insgesamt kontrollierter positioniert und geführt.

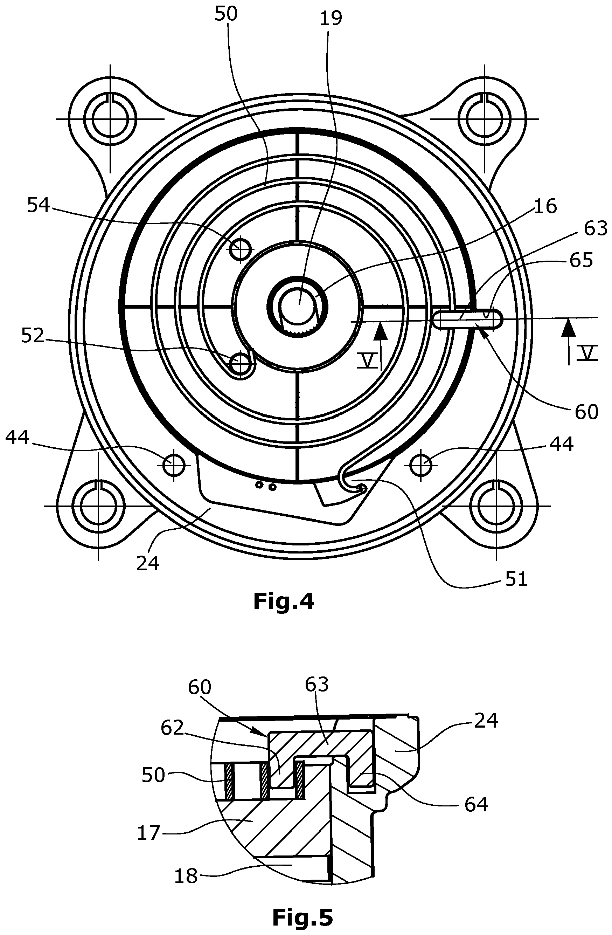

Figur 3, Figur 4 und Figur 5 offenbaren ein erstes Ausführungsbeispiel eines Reibminderungselements 60, welches u-förmig ausgebildet ist. Das Reibminderungselement 60 besteht aus einem ersten axial gerichteten Schenkel 62, der zwischen die äußersten beiden Segmente der Spiralfeder 50 greift und einem zweiten axial gerichteten Schenkel 64, wobei der zweite Schenkel 64 in das Aktorgehäuse 24 gesteckt ist und das Reibminderungselement 60 an einer Bewegung senkrecht zur Axialrichtung des Aktors 10 hindert. Ein Verbindungsabschnitt 63 des Reibminderungselements 60, der zwischen dem ersten Schenkel 62 und dem zweiten Schenkel 64 ausgebildet und zumindest teilweise in einer Ausnehmung 65 im Aktorgehäuse 24 angeordnet ist, verhindert so eine Rotationsbewegung des Reibminderungselements 60 um die Hochachse des zweiten Schenkels 64 und eine axiale Bewegung der Spiralfeder 50. Der zweite Schenkel 64 und die Ausnehmung 65 im Aktorgehäuse 24 verhindern hierdurch jegliche Bewegungen des Reibminderungselements 60 innerhalb einer Ebene, welche orthogonal zur Achse des Aktors 10 angeordnet ist.

Der zwischen die äußeren beiden Segmente der Spiralfeder 50 greifende erste Schenkel 62 stellt sicher, dass die äußeren Segmente der Spiralfeder 50 zu jedem Zeitpunkt zueinander beabstandet bleiben und somit nicht gegeneinander reiben können. Dies reduziert sowohl Eigenreibmomente der Spiralfeder 50, als auch eine damit einhergehende Dissipation. So wird der Energieverbrauch des Aktors 10 zwar geringfügig, aber dennoch gesenkt gegenüber einem Aktor 10 ohne Reibminderungselement 60. Zusätzlich gewährleistet der erste Schenkel 62 bzw. das Reibminderungselement 60, in Analogie zum Federführungsstift 54, eine Führung der Spiralfeder 50 und leistet somit ebenfalls einen Beitrag zur geordneten und kontrollierten Vorspannung und Spannung der Spiralfeder 50.

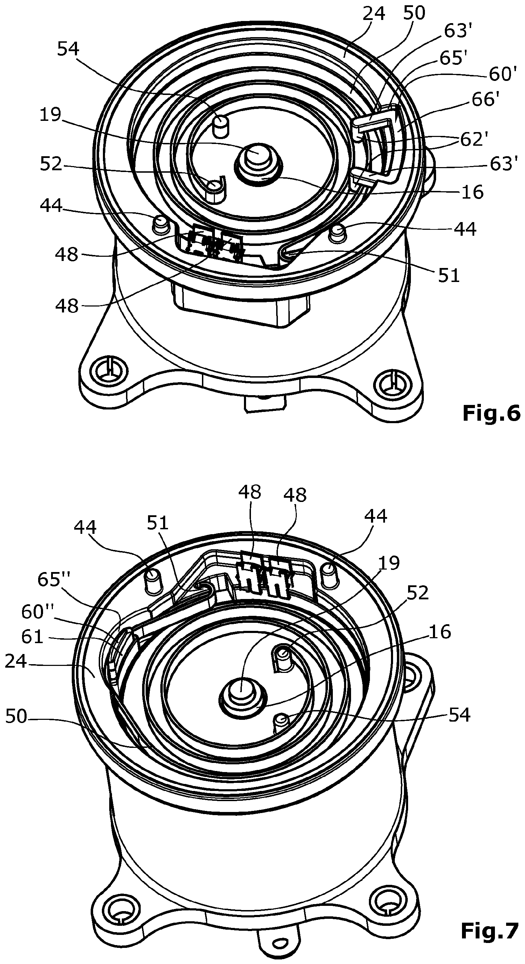

Eine alternative Ausgestaltung des Reibminderungselements 60' ist in Figur 6 gezeigt. Hierbei greifen zwei erste Schenkel 62' zwischen die äußeren beiden Segmente der Spiralfeder 50. Die Effekte, die durch das Reibminderungselements 60' herbeigeführt werden, sind die gleichen, wie die beiden Effekte durch das Reibminderungselement 60. Einerseits wird das Eigenreibmoment der Spiralfeder 50 reduziert und andererseits wird durch das Reibminderungselement 60' eine Führung und kontrollierte Spannung der Spiralfeder 50 sichergestellt. Ein zweiter Schenkel, der in Figur 6 nicht sichtbar ist, kann zylindrisch in Axialrichtung oder auch langgestreckt in Axial- und Umfangsrichtung des Aktorgehäuses 24 ausgebildet sein und steckt im Aktorgehäuse 24. Die Verbindungsabschnitte 63' und ein die Schenkel verbindender Bereich 66' sind zwischen den Schenkeln 62' zumindest teilweise in einer Ausnehmung 65' im Aktorgehäuse 24 angeordnet. Durch die Anordnung des Reibminderungselements 60' in der Ausnehmung 65' werden dem Reibminderungselement 60' weitere Freiheitsgrade entzogen und somit eine Bewegung des Reibminderungselements 60' verhindert. Durch den Deckel 30 werden die Reibminderungselemente 60 und 60' daran gehindert, sich in axiale Richtung zu bewegen und aus dem Aktorgehäuse 24 zu lösen.

Eine dritte Ausführungsform des Reibminderungselements 60" ist in Figur 7 gezeigt. Dieses ist mit dem Aktorgehäuse 24 einteilig und als axialer Vorsprung 61 ausgebildet und zeigt die gleichen Auswirkungen wie die beiden Reibminderungselemente 60 und 60', d.h., die Reibung zwischen den äußeren beiden Segmenten der Spiralfeder 50 wird durch Abstandswahrung der beiden Segmente verringert und das Reibminderungselement 60" stellt eine geführte Bewegung der Spiralfeder 50 bei Vorspannung und Spannung sicher. Hierbei ist die Spiralfeder 50 zumindest teilweise durch einen Zwischenraum 65" zwischen dem sich weitgehend axial und in Umfangsrichtung erstreckenden Reibminderungselement 60" und dem Aktorgehäuse 24 geführt, bevor sie an ihrem ersten um etwa 170° gebogenen Ende am Aktorgehäuse 24 formschlüssig befestigt wird.

Bei der Montage des Aktors 10 wird das erste Ende der Spiralfeder 50 am Aktorgehäuse 24 und das zweite Ende am Federhaltestift 52, welcher mit dem Rückschlussring 17 des Rotors 12 einteilig ausgebildet ist, befestigt. Der Rotor 12 und damit auch die in das Strömungsgehäuse 22 hineinragende Welle 16 des Aktors 10, können in diesem Zustand zunächst weitgehend frei drehen, da der tellerförmige Regelkörper 27 zu diesem Zeitpunkt noch nicht mit der Welle 16 des Aktors 10 verbunden ist und der Rotor 12 daher durch keinerlei Anschläge in seiner Bewegung behindert wird. Hierdurch schwingt sich die Spiralfeder 50 gemeinsam mit dem Rotor 12 zunächst in eine Ruhelage der Spiralfeder 50 ein, in der die Spiralfeder 50 unbelastet ist. Ausgehend von dieser Ruhelage wird der Rotor 12 durch manuelle Betätigung der Welle 16 in eine erste Position rotiert und zunächst gehalten. Infolge der Rotation wird die Spiralfeder 50 vorgespannt, d.h. sie ist durch die in dieser ersten Position in ihr gespeicherte Energie bestrebt in ihre Ruhelage zurückzukehren und übt auf den Rotor 12 eine Rückstellkraft aus. In dieser gehaltenen ersten Position ist die Welle 16 beispielsweise dermaßen gedreht, dass ein auf der Welle 16 montierter Regelkörper 27 senkrecht zum Strömungskanal 26 ausgerichtet wäre und diesen daher versperren würde. In der ersten Position der Welle 16 wird der Deckel 30 des Aktors 10 derart positioniert und mit dem Aktorgehäuse 24 form- und kraftschlüssig befestigt, dass der axial aus dem Deckel 30 hervorstehende und axial in den Aktor 10 hineinragende Montageanschlag 42 unmittelbar an dem mit dem Rückschlussring 17 bzw. Rotor 12 einteilig ausgebildeten Federführungsstift 54 anliegt und somit eine Rückrotation des Rotors 12 bzw. der Welle 16 in die Ruhelage der Spiralfeder 50 verhindert. In diesem Fall, d.h. bei geschlossenem Deckel 30, fungiert der Federführungsstift 54 daher zusätzlich als Anschlag für den Montageanschlag 42. Des Weiteren unterstützt der als Bolzen ausgebildete Montageanschlag 42 den Federführungsstift 54 und das Reibminderungselement 60, 60' oder 60" an der Führung der Spiralfeder 50.

Ausgehend von der ersten Position wird die Welle 16 manuell in eine zweite Position rotiert, in der der Regelkörper 27 an die Welle 16 geschraubt wird, wobei die Drehrichtung von der ersten Position in die zweite Position dieselbe ist wie die Drehrichtung aus der Ruhelage in die erste Position, sodass sich die in der Spiralfeder 50 gespeicherte Energie und damit die Rückstellkraft der Spiralfeder 50 weiter erhöhen. In dieser zweiten Position, in der der Regelkörper 27 an die Welle 16 befestigt ist, kann der Regelkörper 27 an der inneren Wandung des Strömungskanals 26 schräg anliegen und somit den Strömungskanal 26 verschließen. In der zweiten Position, in der der Strömungskanal 26 als Anschlag fungiert, endet der Montagevorgang.

Im Betrieb bewegt sich der Rotor 12 bzw. der Regelkörper 27 zwischen der Position, in der der Regelkörper 27 an der inneren Wandung des Strömungskanals 26 anliegt und einer dritten Position der Welle 16, wobei die Drehrichtung der Welle 16 von der zweiten in die dritte Position dieselbe ist wie die von der ersten in die zweite Position, sodass die die Vorspannung und Rückstellkraft der Spiralfeder 50 in der dritten Position der Welle 16 am größten sind. Die zweite und dritte Position der Welle 16 bilden somit die beiden Endpositionen des Aktors 10. Der Stellweg des Aktors 10 zwischen diesen beiden Endpositionen beträgt hierbei annähernd 70°, wobei die genaue dritte Position durch die Bestromung bzw. Stromstärke des Aktors 10 eingestellt wird. In einer Öffnungsstellung des Ventils, d.h. in Position drei der Welle 16, erstreckt sich die Regelkörperfläche somit in Längsrichtung des Strömungskanals 26 oder mehr oder weniger schräg dazu.

Da gewährleistet sein muss, dass im Falle eines Stromausfalls oder einer technischen Störung des Aktors 10 das Ventil in den geschlossenen Zustand, in die sogenannte Fail-Safe-Position, überführt wird, muss die Vorspannung der Spiralfeder 50 hinlänglich groß sein, um den Regelkörper 27 durch die rein mechanisch gespeicherte Energie der Spiralfeder 50 in der dritten Position in die zweite Position der Welle 16 zurückzudrehen und somit das Ventil zu schließen. Hierfür kann die Welle 16 vor der Befestigung des Regelkörpers 27 an die Welle 16 beispielsweise um mindestens 180° von der Ruhelage in die dritte Position gedreht werden.

Die beschriebenen Figuren dienen ausschließlich der Veranschaulichung ausgewählter Ausführungsbeispiele und stellen nicht die Gesamtheit der möglichen Realisierungen dar und sollen den Umfang der vorliegenden Erfindung nicht einschränken. Es sollte daher deutlich sein, dass der Schutzbereich der vorliegenden Anmeldung nicht auf die beschriebenen Ausführungsbeispiele beschränkt ist. Beispielsweise wäre eine Ausgestaltung denkbar, in der ein oder mehrere Reibminderungselemente in den Deckel integriert sind. Zudem können an Reibminderungselementen Reibreduktionsrollen angeordnet sein. Des Weiteren ist eine Anwendung des Aktors auch in anderen Anwendungsfällen als in Verbrennungskraftmaschinen denkbar.

## Patentansprüche

1. Aktor (10) zur Betätigung eines Regelkörpers (27) einer Verbrennungskraftmaschine mit
einem Gehäuse (20),
einem im Gehäuse (20) angeordneten Elektromotor (11) mit einem Rotor (12) und einem Stator (14),
einem am Gehäuse (20) befestigbaren Deckel (30),
einer rotierbaren Welle (16), die mit dem Rotor (12) zumindest drehfest verbunden ist, sowie
einer im Gehäuse (20) befestigten und in einer Ebene gewickelten Spiralfeder (50),
**dadurch gekennzeichnet, dass**
am Gehäuse (20) ein Reibminderungselement (60, 60', 60") für die Spiralfeder (50) angeordnet ist.

2. Aktor (10) zur Betätigung eines Regelkörpers (27) einer Verbrennungskraftmaschine nach Anspruch 1, **dadurch gekennzeichnet, dass** das Reibminderungselement (60") als axialer Vorsprung (61) am Gehäuse (20) und mit diesem einteilig ausgebildet ist, wobei die Spiralfeder (50) zumindest teilweise in einem Zwischenraum (65") zwischen dem Reibminderungselement (60") und dem radial umgebenden Gehäuse (20) geführt ist.

3. Aktor (10) zur Betätigung eines Regelkörpers (27) einer Verbrennungskraftmaschine nach Anspruch 1, **dadurch gekennzeichnet, dass** das Reibminderungselement (60, 60') einen Schenkel (62, 62') aufweist, der zwischen Windungen der Spiralfeder (50) greift.

4. Aktor (10) zur Betätigung eines Regelkörpers (27) einer Verbrennungskraftmaschine nach Anspruch 3, **dadurch gekennzeichnet, dass** das Reibminderungselement (60) u-förmig mit zwei axialen Schenkeln ausgebildet ist, wobei der erste axiale Schenkel (62) zwischen den äußeren beiden Segmenten der Spiralfeder (50) und der zweite axiale Schenkel (64) im Gehäuse (20) angeordnet ist.

5. Aktor (10) zur Betätigung eines Regelkörpers (27) einer Verbrennungskraftmaschine nach Anspruch 2 bis 4, **dadurch gekennzeichnet, dass** am ersten axialen Schenkel (62, 62') oder am axialen Vorsprung (61) eine drehbar gelagerte Reibreduktionsrolle angeordnet ist.

6. Aktor (10) zur Betätigung eines Regelkörpers (27) einer Verbrennungskraftmaschine nach einem der Ansprüche 3 bis 5, **dadurch gekennzeichnet, dass** das Reibminderungselement (60') mehrere erste axiale Schenkel (62') aufweist, die zwischen die Windungen der Spiralfeder (50) greifen.

7. Aktor (10) zur Betätigung eines Regelkörpers (27) einer Verbrennungskraftmaschine nach Anspruch 6, **dadurch gekennzeichnet, dass** ein Verbindungsabschnitt (63') zwischen zwei ersten Schenkeln (62') ausgebildet ist, der zumindest teilweise formschlüssig in einer Ausnehmung (65') des Gehäuses (20) angeordnet ist.

8. Aktor (10) zur Betätigung eines Regelkörpers (27) einer Verbrennungskraftmaschine nach einem der Ansprüche 4 bis 6, **dadurch gekennzeichnet, dass** ein den zumindest einen ersten Schenkel (62, 62') und den zumindest einen zweiten Schenkel (64, 64') verbindender Bereich (66') des Reibminderungselements (60, 60') zumindest teilweise in einer Ausnehmung (65, 65') am Gehäuse (20) geführt ist.

9. Aktor (10) zur Betätigung eines Regelkörpers (27) einer Verbrennungskraftmaschine nach einem der vorangegangenen Ansprüche, **dadurch gekennzeichnet, dass** die Spiralfeder (50) an einem ersten Ende unmittelbar am Gehäuse (20) formschlüssig befestigt ist.

10. Aktor (10) zur Betätigung eines Regelkörpers (27) einer Verbrennungskraftmaschine nach Anspruch 9, **dadurch gekennzeichnet, dass** die Spiralfeder (50) ein gebogenes erstes Ende aufweist, welches hinter einen korrespondierenden Gehäusevorsprung, der eine sich jeweils in Umfangs- und Axialrichtung erstreckende Komponente aufweist, gesteckt ist und diesen umgreift, wobei das erste Ende mindestens um 110° gebogen ist.

11. Aktor (10) zur Betätigung eines Regelkörpers (27) einer Verbrennungskraftmaschine nach Anspruch 9 oder 10, **dadurch gekennzeichnet, dass** ein zweites Ende der Spiralfeder (50) an einem am Rotor (12) ausgebildeten axialen Vorsprung formschlüssig befestigt ist.

12. Aktor (10) zur Betätigung eines Regelkörpers (27) einer Verbrennungskraftmaschine nach Anspruch 11, **dadurch gekennzeichnet, dass** das zweite Ende der Spiralfeder (50) um mindestens 110° gebogen ist und an einem am Rotor (12) ausgebildeten Federhaltestift (52) befestigt ist bzw. diesen umgreift.

13. Aktor (10) zur Betätigung eines Regelkörpers (27) einer Verbrennungskraftmaschine nach einem der vorangegangenen Ansprüche, **dadurch gekennzeichnet, dass** der Rotor (12) einen Federführungsstift (54) aufweist.

14. Aktor (10) zur Betätigung eines Regelkörpers (27) einer Verbrennungskraftmaschine nach einem der vorangegangenen Ansprüche, **dadurch gekennzeichnet, dass** ein Montageanschlag (42) im Deckel (30) des Aktors (10) ausgebildet ist.

15. Aktor (10) zur Betätigung eines Regelkörpers (27) einer Verbrennungskraftmaschine nach Anspruch 14, **dadurch gekennzeichnet, dass** der Montageanschlag (42) vor der Montage des Regelkörpers (27) bei vorgespannter Spiralfeder (50) gegen den am Rotor (12) ausgebildeten Federführungsstift (54) anliegt.

16. Aktor (10) zur Betätigung eines Regelkörpers (27) einer Verbrennungskraftmaschine nach Anspruch 15, **dadurch gekennzeichnet, dass** der Montageanschlag (42) als Bolzen ausgeführt ist, der von der Innenseite des Deckels (30) axial in das Gehäuse (20) hineinragt.

17. Aktor (10) zur Betätigung eines Regelkörpers (27) einer Verbrennungskraftmaschine nach Anspruch 16, **dadurch gekennzeichnet, dass** der Bolzen aus einem Kunststoff gefertigt und mit dem Deckel (30) einteilig ausgebildet ist.

18. Aktor (10) zur Betätigung eines Regelkörpers (27) einer Verbrennungskraftmaschine nach Anspruch 16, **dadurch gekennzeichnet, dass** der Bolzen aus Stahl gefertigt und in den Deckel (30) gesteckt ist.
